(19) Europäisches Patentamt
European Patent Office
Office européen des brevets

(11) **EP 2 567 203 B1**

(12) **EUROPEAN PATENT SPECIFICATION**

(45) Date of publication and mention of the grant of the patent:
**16.04.2014 Bulletin 2014/16**

(21) Application number: **11719367.2**

(22) Date of filing: **04.05.2011**

(51) Int Cl.:
*G01J 3/28* (2006.01)     *G01J 3/02* (2006.01)
*G02B 3/14* (2006.01)

(86) International application number:
**PCT/GB2011/050871**

(87) International publication number:
**WO 2011/138606 (10.11.2011 Gazette 2011/45)**

(54) **SPECTRAL IMAGING**

SPEKTRALBILDGEBUNG

IMAGERIE SPECTRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.05.2010 GB 201007489**

(43) Date of publication of application:
**13.03.2013 Bulletin 2013/11**

(73) Proprietor: **BAE Systems Plc**
**London SW1Y 5AD (GB)**

(72) Inventors:
• **LAYCOCK, Leslie,Charles**
**Chelmsford**
**Essex CM2 8HN (GB)**
• **GRIFFITH, Michael, Stewart**
**Chelmsford**
**Essex CM2 8HN (GB)**
• **CULFAZ, Ferhat**
**Chelmsford**
**Essex CM2 8HN (GB)**
• **VALLEJO VEIGA, Ivan**
**Bristol**
**South Gloucestershire BS34 7QW (GB)**
• **BLAGG, Adrian Simon**
**Bristol**
**South Gloucestershire BS34 7QW (GB)**

(74) Representative: **BAE SYSTEMS plc**
**Group IP Department**
**Farnborough Aerospace Centre**
**Farnborough**
**Hampshire GU14 6YU (GB)**

(56) References cited:
**WO-A1-2006/054195     US-A1- 2007 217 022**

• **TSAI F S ET AL: "Miniaturized universal imaging device using fluidic lens", OPTICS LETTERS, OSA, OPTICAL SOCIETY OF AMERICA, WASHINGTON, DC, US, vol. 33, no. 3, 1 February 2008 (2008-02-01), pages 291-293, XP001511111, ISSN: 0146-9592, DOI: DOI:10.1364/OL.33.000291**

## Description

FIELD OF THE INVENTION

The present invention relates to spectral imaging apparatus and methods.

BACKGROUND

In the fields of hyperspectral and multi-spectral imaging, hereinafter called "spectral imaging" for the sake of simplicity, separate images of an image scene are captured for a plurality of electromagnetic frequency bands or values. The different electromagnetic frequency bands or values are typically distributed over a plurality of regions of the electromagnetic spectrum, for example distributed over more than one of infra-red, visible light and ultraviolet. Conventional spectral imaging apparatus tends to be large and complex.

Use of diffractive binary optical elements/diffractive lens arrangements in a hyperspectral imager is disclosed in the following references: (i) US 3,641,354; (ii) "Application of binary optical element to infrared hyperspectral detection", Q. Sun et al., Science in China (Series E), Vol. 46, No. 6, December 2003, pages 654-660; and (iii) "Lenslet Arrays for Simultaneous Infrared Multi-spectral Imaging of CB Targets", M. Hinnrichs and N. Gupta, 7th Joint Standoff Detection for Chemical and Biological Defense, October 23-27 2006 (paper available from Pacific Advanced Technology). Such approaches tend to involve moving optical elements of the apparatus axially to provide different focal lengths and/or detection of different electromagnetic frequencies. One disadvantage is this makes implementation difficult for applications that would benefit from smaller and easily portable apparatus.

Deformable lenses are known, for example fluidic lenses, whose shapes are changed to change the focal length of the lens. It is known to implement the change of shape using a pumping mechanism, as described for example in the following references: (i) "Fabrication of a fluidic membrane lens system", J. Draheim et al., Journal of Micromechanics and Microengineering, 19 (2009) 095013, IOP Publishing; (ii) "A rapidly deformable liquid lens", H. Oku and M. Ishikawa, SPIE Newsroom 2009, 10.1117/2.1200912.002505; (iii) "Variable-focus liquid lens", H. Ren et al., Optics Express, Vol. 15, No. 10, 14 may 2007, pages 5931-5936; and (iv) WO 2010/018403.

Examples of membranes used in fluidic lenses are described in the following references: (i) "Self-optimised vision correction with adaptive spectacle lenses in developing countries", M. G. Douali and J. D. Silver, Ophthal. Physiol. Opt. 2004, Vol. 24, pages 234-241; and (ii) "Tuneable optical lenses from diamond thin films", A. Kriele et al., Applied Physics letters, vol. 95, 031905 (2009).

Use of a highly dispersive liquid in a liquid lens, but not a deformable lens, is disclosed in US 5,684,636. The high dispersive liquid is used as part of an arrangement to reduce chromatic aberration, i.e. fundamentally the complete opposite of what is being attempted in spectral imaging.

SUMMARY OF THE INVENTION

The present inventors have realised that various disadvantages, such as relatively large size and complexity, of many conventional spectral imaging apparatus tends to arise at least in part: (i) from using separate items to provide the respective functions of objective light collecting/focusing, electromagnetic frequency separation, and zoom/focusing; and/or (ii) from typically involving moving elements of the apparatus to provide different focal lengths and/or detection of different electromagnetic frequencies.

The present inventors have further realised that it would be desirable to alleviate or overcome some of these deficiencies by providing an arrangement in which two or more of the functions of objective light collecting/focusing, electromagnetic frequency separation, and zoom/focusing are at least to an extent combined, and/or in which use of movement of elements is reduced or eliminated.

Spectral imaging apparatus of the invention combines the actions of focusing and chromatic separation of electromagnetic radiation in a single deformable lens.

In an aspect, the present invention provides a spectral imaging system including: a deformable lens of dispersive material, means for deforming the lens to vary the focal length of the deformable lens; and one or more processors arranged to discriminate between different frequencies of sensed electromagnetic radiation by virtue of differing focusing, arising from the dispersion of the deformable lens, of the respective different electromagnetic frequencies.

In a further aspect, the present invention provides a spectral imaging system including: a deformable lens of dispersive material, a sensor positioned to sense electromagnetic radiation received from the lens, means to deform the lens whereby to vary the focal length of the lens and to focus electromagnetic radiation of differing frequency on the sensor and discriminator means to discriminate a focused frequency of electromagnetic radiation received by the sensor from other unfocused frequencies.

The means to deform the lens may cause the lens to focus in turn on successive frequencies and the discriminator means may consequently discriminate in turn the successive focused frequencies from unfocused frequencies.

The sensor may comprise a focal plane array, for example a digital camera chip, which may provide an image plane which is fixed, in relation to the lens.

The deformable lens may be a fluidic lens.

The deformable lens is preferably relatively highly dispersive.

The discriminator means may comprise a processor which may determine a de-blurring of a single spectral value or band image.

The discriminator means may comprise a processor for removing or ignoring electromagnetic radiation of substantially uniform brightness across detector pixels for unfocused frequencies.

The system may further include a non-deformable lens used substantially for focusing, with the deformable lens being used for spectral discrimination.

The system may be further arranged to alleviate spectral edge effects, for example by including use of a broadband spectral filter.

The system may further be arranged to alleviate spatial edge effects, for example by, collecting light up to the edge of the sensor array, or any convenient limit within the edge, but only forming an image from pixels a certain distance inwards from this limit. Such a distance may be 0.5 times the point spread function.

In a further aspect, the present invention provides a method of spectral imaging, the method comprising, as a first step: deforming a deformable lens of dispersive material to focus a first frequency band of electromagnetic radiation onto an image plane, detecting all of the image radiation at this image plane; repeating the first step as many times as required for further frequency bands of electromagnetic radiation and processing the detected image radiation data to perform spectral discrimination.

In a further aspect, the present invention provides a computer program or number of computer programs arranged such that when executed by a computer system it/they cause the computer system to operate in accordance with the above method.

In a further aspect, the present invention provides a machine readable storage medium storing a computer program or at least one of the number of computer programs according to the above aspect.

BRIEF DESCRIPTION OF THE DRAWINGS

Figure 1 is a schematic illustration (not to scale) of an embodiment of a spectral imaging system;

Figures 2A-2C are comparative schematic illustrations (not to scale) that illustrate in simplified fashion some aspects of the light directing and focusing that takes place during operation of the imaging system of Figure 1;

Figure 3 is a schematic illustration (not to scale) that shows certain details of a deformable lens arrangement of the imaging system of Figure 1;

Figure 4 shows certain process steps of an embodiment of an imaging method;

Figure 5 illustrates the degree of spectral dispersion that the lens must produce for the imaging method to attain a desired spectral resolution (number of spectral wavelength bands for a given spectral range, and so the spectral widths of these bands);

Figure 6 shows schematically a typical Cooke triplet using deformable lenses;

Figure 7 shows schematically a deformable fluidic lens having flat optical surfaces;

Figure 8 shows the lens of Figure 7 with its optical surfaces deformed;

Figure 9 shows schematically an achromatic doublet having active fluidic deformable lenses, and

Figure 10 shows the arrangement of Figure 9 with the lenses re-configured to offer both power and dispersion.

DETAILED DESCRIPTION

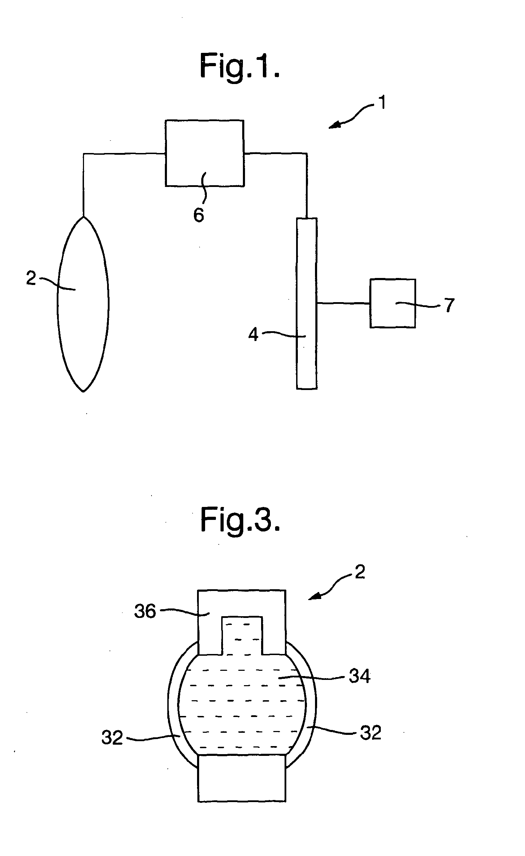

Figure 1 is a schematic illustration (not to scale) of an embodiment of a spectral imaging system 1, hereinafter referred to as the imaging system 1.

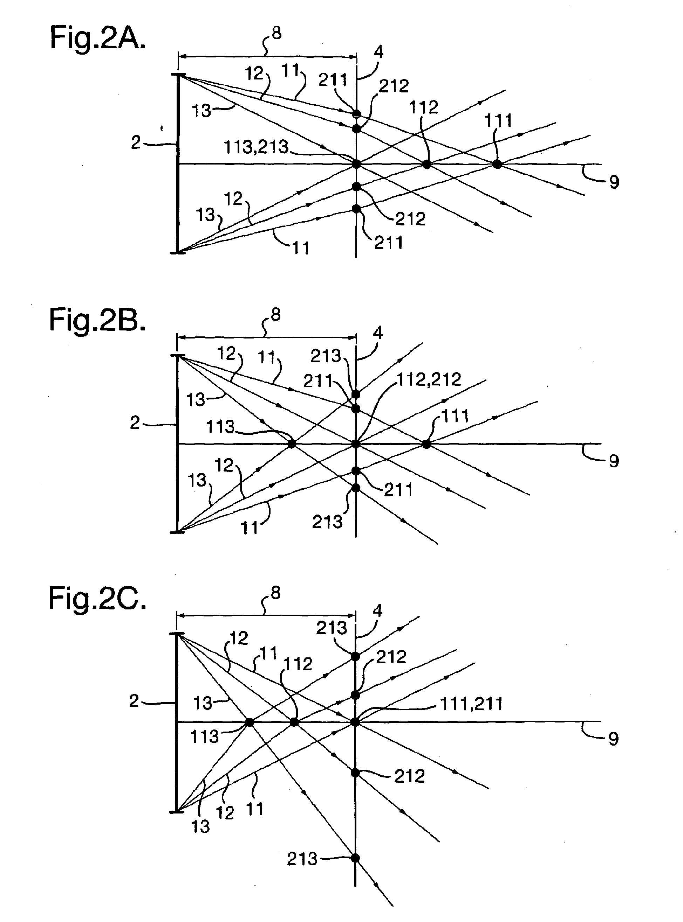

The imaging system 1 comprises a deformable lens arrangement 2, referred to when describing Figures 1 and 2A-2C as the lens 2, an electromagnetic sensor 4, hereinafter referred to as the sensor 4, and a controller 6.

The lens 2 is arranged to direct received image light (the term "light" is used for convenience herein as a general term encompassing electromagnetic radiation of any frequency, including for example infra-red and ultraviolet) toward the sensor 4, i.e. roughly speaking to focus the light toward the sensor 4. It is however to be noted that, as will be explained in more detail below, the light is not necessarily focussed at the sensor 4. In operation, spectral differentiation is achieved whilst nevertheless keeping the separation distance between the lens 2 and the sensor 4 fixed, i.e. in effect a fixed image plane is employed.

The controller 6 is coupled to the lens 2. The controller 6 is also coupled to the sensor 4, as is the processor 7.

Figures 2A-2C are comparative schematic illustrations (not to scale) that illustrate in simplified fashion some aspects of the light directing and focusing that takes place during operation of the imaging system 1.

In this embodiment the lens is a converging lens. Figures 2A, 2B and 2C show in simplified, nominal fashion the paths travelled by exemplary light rays for three different shapes of the lens 2, i.e. for three different focal lengths of the lens 2. (In the figures, for ease of reference the paths of the light rays are shown as they would continue beyond the sensor 4, however in practice the light rays will typically be fully absorbed or reflected at the sensor.) The three different focal lengths decrease going from Figure 2A to Figure 2B to Figure 2C.

Except where stated otherwise, the following description applies to all of Figures 2A, 2B and 2C.

The lens 2 and the sensor 4 are separated at a fixed separation 8. The optical axis of the lens is indicated by reference numeral 9. Example light rays for three different exemplary electromagnetic frequencies (or frequency bands) are shown, in particular light rays 11 of a first frequency, light rays 12 of a second frequency different to the first frequency, and light rays 13 of a third frequency different to the first and second frequencies. It will be appreciated that in other embodiments, other numbers (e.g. greater than three) of different electromagnetic frequency are processed, correspondingly using more than three different shapes of the lens 2.

The lens 2 is relatively highly dispersive, and hence the light rays of different frequency (respective light rays 11, 12 and 13) are focussed to different respective points on the optical axis for the particular nominal focal length (i.e. dependent on its deformed shape, and different in each of Figures 2A, 2B and 2C) of the lens 2. The light rays 11 of the first frequency are focused at a point 111 on the optical axis 9; the light rays 12 of the second frequency are focused at a different point 112 on the optical axis 9; and the light rays 13 of the third frequency are focused at a different point 113 on the optical axis 9.

By virtue of this, the light rays of different frequency (respective light rays 11, 12 and 13) fall on the sensor 4 at different respective locations for the particular nominal focal length of the lens 2. In the Figures, the light rays 11 of the first frequency are shown falling on the sensor 4 at positions 211; the light rays 12 of the second frequency are shown falling on the sensor 4 at positions 212; and the light rays 13 of the third frequency are shown falling on the sensor 4 at positions 213.

For ease of reference, the three different focal lengths of the lens 2 represented respectively in Figures 2A, 2B and 2C are those that respectively focus the light rays of each of the three different frequencies at the plane of the sensor 2.

Hence, in Figure 2A, which shows the case where the nominal focal length of the lens 2 provides for the light rays 13 of the third frequency to be focused at the plane of the sensor 4, these light rays 13 produce only one position 213, which moreover is collocated with the above mentioned focus point 113 of the light rays 13 of the third frequency, thereby representing a focused form of the image scene for the third frequency. Regarding the other two frequencies, however, in Figure 2A there are two positions 211 produced by the light rays 11 of the first frequency, and two further positions 212 produced by the light rays 12 of the second frequency, these positions 211 and 212 of the first and second frequencies representing respective unfocused forms of the image scene at the sensor 4 for these frequencies.

Correspondingly, in Figure 2B, which shows the case where the nominal focal length of the lens 2 provides for the light rays 12 of the second frequency to be focused at the plane of the sensor 4, these light rays 12 produce only one position 212, which moreover is collocated with the above mentioned focus point 112 of the light rays 12 of the second frequency, thereby representing a focused form of the image scene for the second frequency. Regarding the other two frequencies, however, in Figure 2B there are two positions 211 produced by the light rays 11 of the first frequency, and two further positions 213 produced by the light rays 13 of the third frequency, these positions 211 and 213 of the first and third frequencies representing respective unfocused forms of the image scene at the sensor 4 for these frequencies.

Correspondingly, in Figure 2C, which shows the case where the nominal focal length of the lens 2 provides for the light rays 11 of the first frequency to be focused at the plane of the sensor 4, these light rays 11 produce only one position 211, which moreover is collocated with the above mentioned focus point 111 of the light rays 11 of the first frequency, thereby representing a focused form of the image scene for the first frequency. Regarding the other two frequencies, however, in Figure 2C there are two positions 212 produced by the light rays 12 of the second frequency, and two further positions 213 produced by the light rays 13 of the third frequency, these positions 212 and 213 of the second and third frequencies representing respective unfocused forms of the image scene at the sensor 4 for these frequencies.

Thus, for each of the lens shapes i.e. focal lengths provided to the lens 2, light rays of one of the frequencies provide a nominally focused image, whereas light rays of other frequencies provide a form of nominally unfocused image. This difference is made use of by the controller 6 to process the sensor output to provide image information that discriminates between the different frequencies to provide separate image information for separate frequencies (i.e. performs spectral discrimination), as will be described in more detail later below.

Figure 3 is a schematic illustration (not to scale) that shows certain details of the deformable lens arrangement 2 of this embodiment. The deformable lens arrangement 2 comprises a deformable membrane 32, hereinafter referred to as the membrane 32, and a fluid 34 contained by the membrane 34. The fluid 34 is coupled to a pumping mechanism 36.

In operation (in overview), the fluid 34 and membrane 32 provide the lens behaviour. The shape of the lens is changed by the pumping mechanism 36 exerting more or less pressure on the membrane 32 via the fluid 34. The nominal focal length of the lens changes due to the change of shape.

The deformable lens arrangement 2 is shown in a highly schematised form in Figure 3 to allow convenient understanding of the operation thereof. In practice, and in more detail, the structure and operation of the deformable lens arrangement 2 are selected and implemented according to the particular imaging requirements under consideration. Examples of structures and principles of operation that may be employed (or adaptations thereof may be employed) are described in the following references, each of which is incorporated herein by reference: (i) "Fabrication of a fluidic membrane lens system", J. Draheim et al., Journal of Micromechanics and Microengineering, 19 (2009) 095013, IOP Publishing; (ii) "A rapidly deformable liquid lens", H. Oku and M. Ishikawa, SPIE Newsroom 2009, 10.1117/2.1200912.002505; (iii) "Variable-focus liquid lens", H. Ren et al., Optics Express, Vol. 15, No. 10, 14 may 2007, pages 5931-5936; and (iv) WO 2010/018403.

Preferably, the fluid 34 employed is one that has a high dispersion, i.e. a fluid whose optical properties, such as refractive index, vary to a relatively large extent as a function of electromagnetic frequency, at least over or between the intended frequencies to be imaged. (A highly dispersive lens is preferred in order: to give fine spectral resolution; to improve imaging quality by improving focusing of a given band of electromagnetic frequencies; and to make processing of the measured radiation easier by maximising defocusing of unfocused radiation to maximise "off-band greyness" - see below.) Some examples of such relatively highly dispersive fluids are: (i) cinnamaldehyde $C_6H_5CH : CHCHO$; (ii) "EC31" immersion liquid (trademark) available from Cargille Laboratories, 55 Commerce Rd., Cedar Grove, NJ 07009 USA; and (iii) suitable liquid crystals, for example metal-free and nickel(II) phthalocyanines liquid crystals. Further details of some of these are described in the following references: (i) "Dispersive liquids - Wilcox, The Amerial Mineralogist Vol. 49 1964; and (ii) "The refractive index dispersion and the optical contents of liquid crystal metal-free and nickel(II) phthalocyaninesF. Yakuphanoglu et al., Physica B 373 (2006) pages 262-266.

The fluid may be liquid or gas.

Some examples of materials that may be used for the membrane are those described in the above mentioned references describing deformable lens. Some further examples of materials that may be used for the membrane are polyester, mylar, diamond (transparent into the infra-red region), or Baader AstroSolar (trademark) safety film (the latter available from the Baader Planetarium, Zur Sternwarte, D-82291 Mammendorf, Germany). Some of these, and by way of example some other possibilities, are described in the following references: (i) "Self-optimised vision correction with adaptive spectacle lenses in developing countries", M. G. Douali and J. D. Silver, Ophthal. Physiol. Opt. 2004, Vol. 24, pages 234-241; and (ii) "Tuneable optical lenses from diamond thin films", A. Kriele et al., Applied Physics letters, vol. 95, 031905 (2009).

More generally, dependent on the intended frequency values or ranges to be imaged, and other design criteria, the fluid and/or membrane materials may be selected or adapted accordingly from the examples given in the above mentioned references, or any other appropriate ones may be used.

Further details of the sensor 4 of this embodiment are as follows. In this embodiment, the sensor 4 is a conventional electromagnetic radiation sensor, in the form of a detector array, such as a silicon-based charge coupled device (if e.g. detecting visible to near infra-red light).

In operation, the controller 6 synchronises the output of the sensor 4 with the changing of the shape of the lens of the deformable lens arrangement 2, such as to provide or control a tie-in between the output of the sensor 4 and the current focal length of the lens, i.e. in effect the particular value or range of electromagnetic frequency the system is in effect tuned to. More particularly, the controller controls the lens to cycle consecutively through the different focal lengths (i.e. shapes) of lens thereby allowing the different frequencies to be focused consecutively according to that cycling i.e. the different focused images for the respective different frequencies are in effect provided in a time-multiplexed manner. Output of the sensor 4 is then sent to the processor 7. Details of how the processor 7 processes the sensor output to provide image information that discriminates between the different frequencies to provide separate image information for separate frequencies will be described in more detail later below.

The processor 7 may be arranged to process the sensor output to provide image information that discriminates between the different frequencies to provide separate image information for separate frequencies in any appropriate manner. This may be implemented, for example, by utilising some or all of the following information and concepts, in one or more corresponding algorithms.

The number of photons actually collected by each pixel p-q, for each band b and lens setting d is hereinafter denoted by:

$$N^{(d)}_{b,p-q}$$

where:

d is a setting of the lens;
b is a frequency band; and
p-q denotes a pixel in the pth row, and qth column of the detector array.

The pixel at the pth row and qth column of the detector array is hereinafter referred to as "pixel p-q".

Similarly, the number of photons which *would* be collected by each pixel p'-q' if focused by an ideal lens (i.e. number of photons "aimed" at p'-q') is hereinafter denoted by:

$$N'_{b,p'-q'}.$$

As the setting of the lens, d, is adjusted, the amount of light in a particular band b, collected by pixel p-q of the detector array, will vary. This is because the point spread function for each b varies with d.

Using a calibration process (e.g. a process involving scanning a laser spot across the detector array), it is possible to determine, for a given band b, the fraction of the total number of photons aimed at the pixel p'-q', which are however collected by the pixel p-q (i.e. the pixel in the pth row, and qth column of the detector array). This fraction will hereinafter be denoted by:

$$F^{(d_b)}_{b,p-q,p'-q'}$$

where:

$d_b$ is the setting of the lens for which b-band light is focused;
b is a frequency band;
p-q denotes a pixel in the pth row, and qth column of the detector array; and
p'-q' denotes a pixel in the p'th row, and q'th column of the detector array.

A real image may be measured to determine the actual number of photons collected by the pixel p-q during use at lens setting $d_b$. This number of photons collected by the pixel p-q is hereinafter denoted by:

$$N^{(d_b)}_{b,p-q}$$

The values of $F^{(d_b)}_{b,p-q,p'-q'}$ are functions of the lens setting $d_b$. Therefore:

$$N_{b,p-q}^{(d_b)} = \sum_{p}\sum_{q} F_{b,p-q,p'-q'}^{(d_b)} N'_{b,p'-q'}$$ (1)

where $N'_{b,p'-q'}$ is the number of photons in band b aimed at the pixel p'-q', i.e. which would be collected by p'-q' if all diffraction, defocusing and other scattering effects were removed.

In other words, the number of photons collected by the pixel p-q is the sum over all of the pixels of the number of photons that are aimed at each of these pixels multiplied by the fraction of those photons that hit the pixel p-q instead.

In this embodiment, the detector array is an array having m rows of pixels and n columns of pixels. Thus, p=1,....,m, and q=1,...,n. Therefore, equation (1) above corresponds to m x n simultaneous equations, for a single (focused) band b, and no other (defocused) bands. These simultaneous equations are as follows:

$$N_b^{(d_b)} = F_b^{(d_b)} \times N'_b$$

Where:

$N_b^{(d_b)}$ is an m x n matrix (i.e. $N_{b,p-q}^{(d_b)}$ for p=1,...,m and q=1,...,n);

$F_b^{(d_b)}$ is an m x n x m x n tensor; and

$N'_b$ is an m x n matrix (i.e. $N'_{b,p'-q'}$ for p'=1,...,m and q'=1,...,n).

Therefore:

$$\left[F_b^{(d_b)}\right]^{-1} N_b^{(d_b)} = N'_b$$

Thus, the number of photons aimed at each pixel p'-q', for a single focused spectral band image b, may be determined (diffraction and other scattering effects are removed).

This may be used to provide de-blurring for an image of a single focused spectral band b. If more than one band images are simultaneously collected by the detector array (one focused at each lens setting, the rest defocused, as in Figures 2A, 2B and 2C), they may be dealt with as follows.

The lens setting d may be progressively adjusted, and light for each $d_b$ (i.e. for each lens setting at which b-band light is focused), b=1, 2, ..., a, is collected.

At each $d_b$, and for a given pixel p-q, the following can be measured:

$$\sum_{b} N_{b,p-q}^{(d_{b'})} = S_{p-q}^{(d_{b'})}$$

This is the number of photons collected by the pixel p-q, with the lens setting being $d_{b'}$ (i.e. lens setting at which b'-band light is focused), summed over all light bands.

Also, (c.f. equation (1) above)

$$\sum_{b} N_{b,p-q}^{(d_{b'})} = S_{p-q}^{(d_{b'})} = \sum_{b}\sum_{p}\sum_{q} F_{b,p-q,p'-q'}^{(d_{b'})} N_{b,p'-q'}^{'} \qquad (2)$$

The lens setting may be varied. Therefore, since b= 1, 2, ..., a, equation (2) above corresponds to a x m x n simultaneous equations.

Thus, since $F_{b,p-q,p'-q'}^{(d_{b'})}$ has been measured using the calibration process:

$$S = F \times N'$$

Where S is an m x n matrix or tensor, N' is an a x m x n tensor, and F is an a x m x n x a x m x n tensor.

Equivalently:

$$S_{pq}^{(d_{b'})} = F_{bpqp'q'}^{(d_{b'})} N'_{bp'q'}$$

(using Einstein's summation convention for subscripts).
Thus,

$$\left[F_{bpqp'q'}^{(d_{b'})}\right]^{-1} S_{pq}^{(d_{b'})} = N'_{bp'q'}$$

For convenience, $F_{bpqp'q'}^{(d_{b'})}$ may be decomposed into second or third order tensors.

Thus, the number of photons aimed at each pixel p-q, for a multiple spectral band image, may be determined (diffraction, defocusing, and other scattering effects are removed). This may be used to provide de-blurring for a multiple spectral band image.
The following further optional techniques that tend to advantageously make the processing algorithms more efficient may be utilised.
"Greyness" of unfocused band images far from a pixel of interest may be exploited. If light at far pixels is "grey", i.e. of constant brightness across unfocused bands (or a substantially equal signal in each band), then these contributions may be removed, or ignored, for example by using a simple global subtraction. This advantageously tends to simplify the tensor $F_{bpqp'q'}^{(d_{b'})}$ because, for a given pixel p-q, most elements (in an appropriate basis) can be ignored, i.e. most of the elements in the tensor/matrix can be assumed to be zero. So for each pixel this tensor can be inverted more efficiently, i.e. $\left[F_{bpqp'q'}^{(d_{b'})}\right]^{-1}$ tends to be easier to determine.

The above simplifications may be advantageously improved by designing the fluidic lens to enhance "off-band greyness". This may be achieved, for example, by increasing the wavelength dispersion of the lens. "Off band greyness" tends to provide that, for unfocused bands, photons aimed at any given pixel are distributed (i.e. spread out or "smeared") as evenly as possible over the entire pixel array.
Aberration is continuous with wavelength, so the above mentioned smearing of the detected photon distribution tends to occur within a band. Thus, to improve the simplifications to the tensor $F_{bpqp'q'}^{(d_{b'})}$, mentioned above, a band width may be chosen to reduce this smearing as much as possible. Also to improve the simplifications, the fluidic lens may be designed to maximise the rate of defocusing with respect to wavelength as this wavelength becomes more different from the band wavelengths. This can be achieved, for example, by maximising the wavelength dispersion of the lens.

Preferably spectral "edge effects" in the processing algorithm are alleviated. One way to achieve this is as follows. A gradual reduction of sensitivity of the sensor, to wavelengths at the periphery of the spectral range of interest, may lead to collection of light in a wider spectral range than desired to collect sufficient information to allow the processing algorithm to properly function. In order to limit this spectral range, a broadband spectral filter may be employed with sharp reductions in transmission at the edges of its spectral window. This would filter out collected light at undesired wavelengths. Eliminating these wavelengths (reducing their intensities to zero), or reducing the levels of these wavelengths, will eliminate or reduce their effect on the operation of the processing algorithm, which would then only substantially be affected by substantially non-zero intensities. Similarly, using such a spectral filter with two or more non-contiguous spectral pass bands would allow unwanted wavelengths in the middle of the collected spectral range to be ignored.

Preferably spatial "edge effects" in the processing algorithm are alleviated. One way to achieve this is as follows. An image containing pixels at the edge of a sensor array cannot be formed in idealised fashion as we would not measure light missing the sensor array that is needed by the processing algorithm to solve its system of simultaneous equations. Assuming the point spread function has a finite width w on the sensor array, this problem may be avoided or alleviated by collecting light up to the edge of the sensor array (or any convenient limit within the edge), but only forming an image from pixels a certain distance inwards from this limit, e.g. a distance 0.5w inwards from this limit.

Apparatus for implementing the above described controller 6, and controller functions and operations, and for performing some or all of the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Another possibility is to use, or adapt, existing image processing algorithms such as are used in diffractive lens spectral imagers.

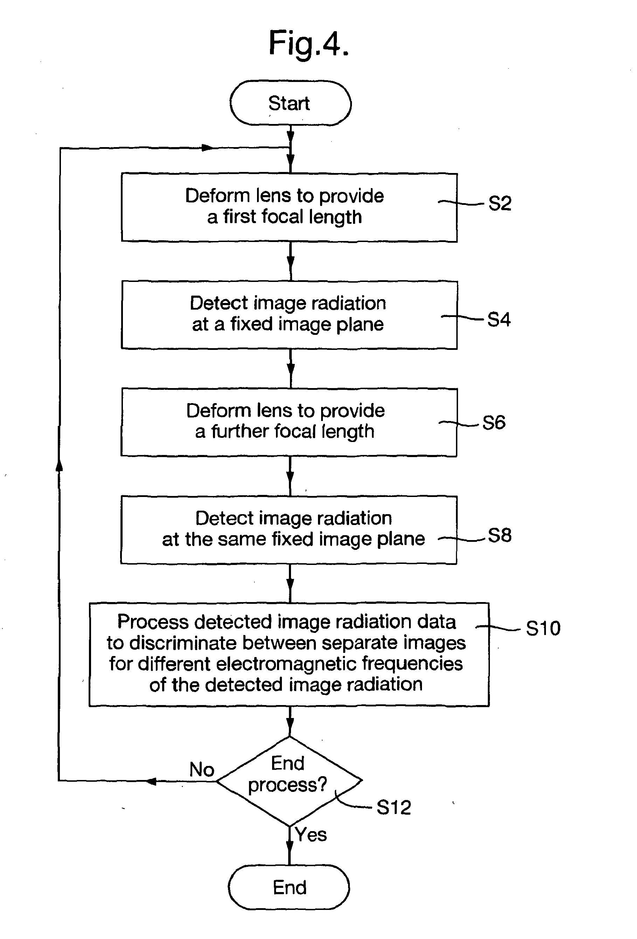

It will be appreciated that the above described imaging system 1 allows a corresponding imaging method to be performed. Figure 4 shows certain process steps of an embodiment of such an imaging method.

At step s2, the deformable lens is deformed to provide a first nominal focal length.

At step s4, image radiation is detected at a fixed image plane.

Thereafter, at step s6, the deformable lens is deformed to provide a further nominal focal length that is different from the first nominal focal length.

At step s8, image radiation is detected at the fixed image plane.

At step s10, the detected image radiation data is processed to discriminate between separate images for different electromagnetic frequency components of the detected image radiation (i.e. spectral discrimination is performed).

At step s12 it is determined if the process is completed. If not, i.e. if images are to continue to be provided, the process returns to step s2.

In the above simplified example, only two different frequencies are accommodated, i.e included in each scan cycle. However, if more frequencies are to be accommodated, then a pair of steps corresponding to steps s6 and s8 are carried out after step s8 for each additional frequency to be accommodated.

The above described embodiments may be implemented or adapted to provide spectral imaging, in which separate images of an image scene are captured for a plurality of electromagnetic frequency bands or values. There are a number of possibilities that arise. For example, in simple embodiments although separate images are produced for various different frequency values or ranges, these are all in the same region of the electromagnetic spectrum in the sense of e.g. ultraviolet, visible light, or infra-red, and so on. However, in other embodiments, separate images are produced for various different frequency values or ranges that are distributed over two or more regions of the electromagnetic spectrum in the sense of e.g. ultraviolet, visible light, or infrared, and so on. For any of these possibilities, the various different frequency values or bands may be contiguous or not contiguous, or a mixture thereof, i.e. some may be contiguous while others are not. It is noted that the word "bands" in the terminology "for various different frequency values or bands" encompasses situations where a given range (band) of frequencies are processed together, with one common lens shape i.e. nominal focal length setting, i.e. as if they were a discrete frequency value, and with the errors produced thereby being sufficiently small to allow useful formation of the image.

Another possibility is that rather than the shape of the lens being changed between discretely different shapes, the lens may have its shape changed gradually, with the processing compensating or otherwise accommodating the resulting gradual change in detected image properties.

To provide additional optical performance, in other examples the fluidic lens may be combined with conventional solid glass elements. For example, a separate lens may be used to focus light at a given distance, with the deformable lens used only to provide spectral separation of the focal planes. This may in certain embodiments allow more efficient or simpler processing algorithms.

While the system so far described is based on the use of a single deformable lens, there are potential advantages to using more than one deformable lens or a combination of both deformable and passive lens elements.

In general, the larger the number of elements and surfaces available for adjustment (either as deformable elements or static elements), the greater the flexibility in designing an optical imaging system. Such adjustment is possible, for example, through the design of the surfaces and the choice of refractive index/dispersion for the deformable and passive elements. Thus, non-chromatic type aberrations, e.g. coma or astigmatism, can be minimised whilst maintaining as large a chromatic aberration as possible.

Additionally, with more elements, greater functionality can be introduced, for example, by adding zoom capability or offering a system that can be re-configured to work both as a standard imaging system and as a spectral imaging system.

The following are discussed briefly as examples, but someone skilled in the art would be able to realise further combinations:-

a) The use of two consecutive deformable lens elements with the capability to tune between convex and concave shapes, to enable a zoom lens capability.

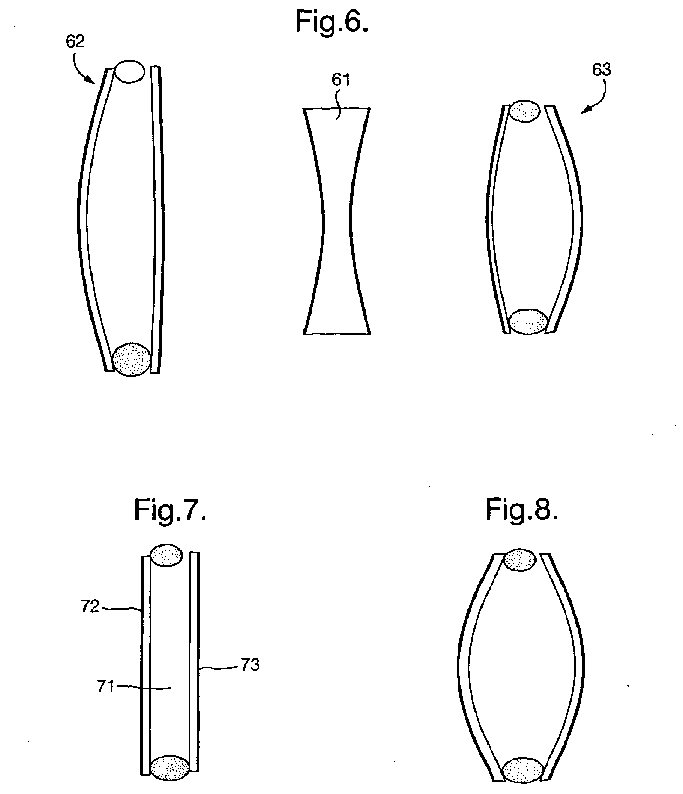

b) Figure 6 below shows a typical Cooke triplet arrangement with a central passive negative element 61. This arrangement will offer more flexibility in balancing the combined requirement to minimize non-chromatic distortions whist maintaining a high level of chromatic aberration. Additionally, if the central element 61 is made from a low dispersion glass, the use of two deformable elements (62, 63) which are highly dispersive should offer a greater level of chromatic separation than a single lens design.

c) If the passive central element 61 in the centre of the Cooke triplet is replaced by a further deformable element (not shown), the system will also be able to offer a zoom lens capability. In this case, it would again be advantageous to choose a negative deformable lens with a low dispersion.

While the above discussion assumes that the optical system will always be required to act as a spectral imaging system, it may prove beneficial for portable use to combine a number of optical functions into one system. In this instance it would be advantageous for the system to switch between conventional imaging and multi spectral or hyper spectral imaging. This could be achieved by configuring the optical system to work with one or more fluidic elements whose dispersion properties could be tuned. Two examples of how this can be achieved are given below:-

d) In a system which contains a number of lens elements, by introducing a fluidic lens element containing a highly dispersive fluid 71 whose surfaces 72, 73 can be made fully flat to offer no power and no dispersion, see Figure 7. When fully active, this lens element would introduce both power and chromatic dispersion, see Figure 8. In this case, the chromatic aberration is intimately linked with the optical power. As such, there will need to be another deformable element or combination of elements whose power can be varied without introducing chromatic aberration. This could be an element as discussed in the paragraph below.

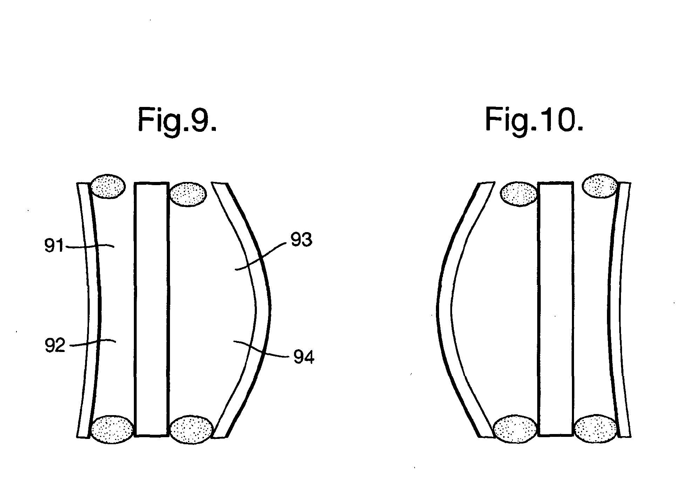

e) A typical achromatic doublet (not shown) could combine a low power negative element made from high dispersion flint glass with a higher power positive element made from low dispersion crown glass. This would achieve positive power whilst minimizing chromatic aberrations. This type of doublet can also be used with active fluidic elements as in Figure 9; the flint glass can be replaced by a fluidic cavity 91 which contains a high dispersion fluid 92 and the crown element can be replaced by a fluidic cavity 93 which contains a low dispersion fluid 94. Such a system would offer variable optical power without introducing chromatic distortion; see the example in Figure 9.

Because both sides of the doublet are active, if required, this lens by itself can be re-configured to offer both power and dispersion, see Figure 10.

In the above embodiments, the deformable lens arrangement is implemented by use of a fluidic lens, whose nominal focal length is changed by changing the overall shape of the lens. However, in other embodiments, other forms of deformable lens may be employed for changing the nominal focal length.

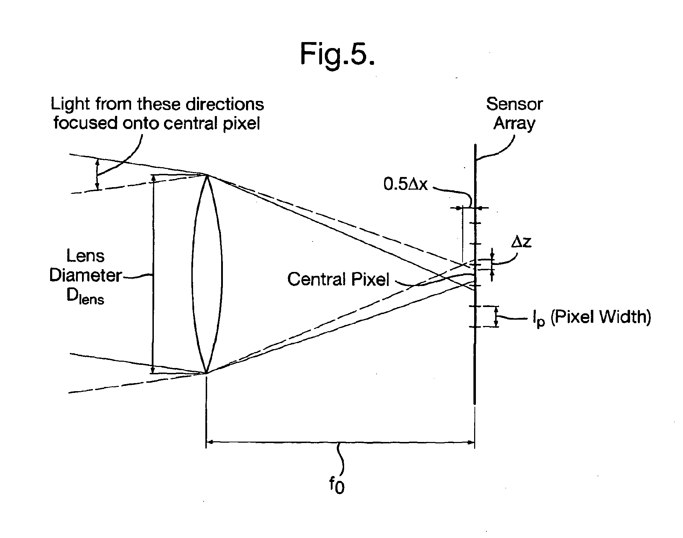

Preferably the deformable lens comprises a highly dispersive material e.g. the fluid 34 and/or the membrane 32 comprises a highly dispersive material. More generally, preferably the lens of the lens arrangement is highly dispersive. (A highly dispersive lens is preferred in order: to give fine spectral resolution; to improve imaging quality by improving focusing of a given band of electromagnetic frequencies; and to make processing of the measured radiation easier by maximising defocusing of unfocused radiation to maximise "off-band greyness".) One way in which the lens material may be considered as, or fulfils the requirement of "highly dispersive", relative to the dimensions of pixels of the sensor 4 and the separation 8 between the lens and the sensor is if it causes sufficient axial separation of the focal lengths of different wavelengths to cause significant defocusing of light over at least half the total spectral range, $\Delta\lambda$, detected by the sensor. For the deformable lens, this should preferably be true for any given lens setting intended to be used. Thus, light from no more than $0.5\Delta\lambda$ would be in focus on the sensor array. (This means that, at the minimum, a two-waveband image could be formed, which is the minimum needed to be considered "multispectral".) The terminology "in focus" is taken here to mean that light that ought to be focused onto a particular pixel should not stray further than a relatively small proportion of a pixel width from this pixel. Preferably, that small proportion is half a pixel width. More preferably, that small proportion is a quarter of a pixel width; yet more preferably, an eighth of a pixel width. This may further be understood by referring to Figure 5. Figure 5 shows this concept for the case of the small proportion being a quarter of a pixel width (i.e. $\Delta z \leq 0.5 l_p$, see diagram). Let the axial spatial separation of focal lengths for different wavelength bands over $0.5\Delta\lambda$ be $\Delta x$. Thus (see Figure 5):

$$\frac{0.5\Delta x}{\Delta z} = \frac{f_0 - 0.5\Delta x}{D_{lens}}$$

$$\therefore 0.5\Delta x D_{lens} = (f_0 - 0.5\Delta x)\Delta z$$

$$\therefore 0.5\Delta x (D_{lens} + \Delta z) = f_0 \Delta z$$

$$\therefore \Delta x = \frac{2 f_0 \Delta z}{D_{lens} + \Delta z}$$

If $\Delta z$ is much smaller than $D_{lens}$ ($\Delta z << D_{lens}$), we can write the following approximate expression for $\Delta x$:

$$\Delta x \approx 2 \frac{f_0}{D_{lens}} \Delta z$$

Using this approximation, and substituting for $\Delta z$ using $\Delta z \leq 0.5 l_p$, we get:

$$\Delta x \leq \frac{f_0}{D_{lens}} l_p .$$

In other words, preferably the dispersion of a "highly dispersive" lens material should produce a $\Delta x$ satisfying this inequality (or corresponding values for e.g. the cases of the small proportion being a quarter of a pixel width, or the small proportion being an eighth of a pixel width).

Potential uses of the invention are many and varied. Some examples are given below.

In the field of Emergency Response and Defence, the invention can be used for spectral tagging, targeting, standoff detection of explosive devices and chemical and biological agents. Specifically, maps with geo-location and spectral information can be used by military personnel. Also, naval periscopes can be equipped with the invention.

In the field of Surveillance and Security, Spectral imaging adds value to fixed security camera networks by allowing moving "objects" (people, vehicles) selected by the operator to be tracked by recognition of their spectral signature. Such automated spectral tracking can be handed off from one camera to another, even if they do not have overlapping fields of view. This will be useful in real-time tracking of suspicious people/vehicles/etc. or in speeding up data mining of archive footage.

Furthermore, compact embodiments of the invention can be used to watch for the spectral signatures of particular substances of interest (e.g. drug or explosive residue).

In the field of Search and Rescue, large areas of sea or land can be scanned, looking for people or objects, perhaps occupying only a few pixels of image, that are difficult to identify spatially. A wide-angle design of lens might be used in this application to maximise field of view. The compactness of the proposed design would make it suitable for unmanned aerial vehicles tasked for search & rescue. Hand-held or helmet- or clothing-mounted imagers would be useful for search & rescue personnel (e.g. firefighters) for quickly identifying objects/people of interest in low-visibility environments. In the firefighting example, infrared wavelengths would be better at penetrating smoke than visible light. Adding spectral information to this would allow a "false colour" view to be presented to the firefighter (e.g. on a head-up display); or, if searching for something with a known spectral signature, a matched filter detection map could be overlaid.

In the fields of Research and Investigation, spectral imaging with the invention will give research scientists the opportunity to non-invasively and rapidly analyse crime scenes, evidence and other objects of interest. The invention can also be applied in analysis of art or other historical documents or artefacts. Forensic units will be small and portable enough to be utilized in a wide range of environments, especially at crime scenes. Particular wavelengths of interest are the near-UV (0.1-0.4$\mu$m wavelength), NIR (0.7-1.4$\mu$m) and SWIR (1.4-3.0$\mu$m). Near UV imaging can clearly reveal organic traces, such as fingerprints. Meanwhile, NIR and SWIR wavelengths can be used to analyse documents or images, eg paintings, to detect counterfeiting or concealment.

In the field of Life Science Research, when used as a multi channel spectrometer, high throughput screening is possible where high spectral resolution, spatial differentiation, and channel suppression are all critical parameters. Examples are: Fluorescence imaging, High throughput screening (allows study of whole biological systems, rather than individual components),

Multi-channel spectroscopy (e.g. keep track of multiple markers at once in a biological system), Nanobead & quantum dot detection (coloured markers for imaging and analysis of biological systems), and drug development.

In this field the apparatus of the invention should be sensitive to key wavelength ranges, eg colours of marker chemicals, spectral fingerprints of active ingredients in experimental drugs.

In the field of Medical Imaging, for diagnostic medical applications, hyperspectral sensing provides a highly resolved means of imaging tissues at a either macroscopic or cellular level and providing accurate spectral information relating to the patient, tissue sample, or disease condition.

One obvious advantage is the ability to non-invasively scan a complete sample in-vivo with high spatial and spectral resolution.

Specific medical uses of hyperspectral imaging are as follows: Non-invasive diagnostic imaging (e.g. optical biopsy); Tissue demarcation; Therapeutic analysis (e.g. monitoring of symptoms); Retinal imaging; Colonoscopy; Skin cancer detection/diagnosis; Monitoring of treatment / drug delivery. The apparatus should be sensitive to key wavelengths, eg. colours in which healthy and non healthy tissues consistently differ.

In the field of Microscopy, for applications such as tracking and classification of cellular drug absorption and delivery or quantifying the presence of tagged nano-particles within tissue samples, hyperspectral imaging according to the invention represents a valuable extension of traditional research techniques that can utilize existing optical microscopes available within the laboratory. For example, spectral imaging through a microscope can use spectral signature to non-invasively map species concentration in a microscope stage, and their time evolution. This can be done for multiple species at once, because of their unique spectral signatures which can be distinguished with hyperspectral analysis algorithms. Example application areas are: drug discovery, cellular spectroscopy, fluorescence and nanobead and nano particle research.

In the field of Remote Sensing, the invention can be used for both airborne and stationary spectral analysis for remote sensing applications. The use of hyperspectral images, which include all the spatial and spectral information enable researchers to generate and analyse indepth spectral imaging data. Examples are: Civil and Environmental Engineering, Environmental Monitoring, Pollution Detection, Forestry Management, Precision Agriculture, and Mineral Exploration.

In the field of Mineral/Raw Material Exploration and Mine/Quarry Inspection, the Mining industry can use spectral imaging in two main ways: prospecting, mapping and mining site inspection, and process monitoring and control. Specific applications are: airborne exploration for mineral mapping; drill core analysis (in field or in laboratory); quarry and excavation analysis, and environmental monitoring and management.

In the field of Food Safety and Quality, use of the invention is envisaged for in-line inspection of poultry, fruits, vegetables, and specialty crops. While machine vision technology has been a standard approach to many food inspection and safety applications, hyperspectral imaging offers the incremental benefit of analyzing the chemical composition of food products thereby significantly increasing production yields. Through high-throughput chemometrics, food products can be analyzed with hyperspectral sensing for disease conditions, ripeness, tenderness, grading, or contamination.

Deployment possibilities include fixed spectral imagers on processing/production lines; handheld units for spot inspections in shops, warehouses or processing centres; mounting in unmanned aerial vehicles or other low-cost aircraft (e.g. piloted microlights) for crop inspection.

In the field of Mineral Processing, the invention provides unique benefits to increasing the production capacity and efficiency of key operational areas within the mining and mineral processing industries. The use of hyperspectral imaging for the in-line inspection of raw minerals and materials in process holds benefits for increasing the quantity and quality of finished product. If hyperspectral imaging sensors are deployed early on in the production process, raw material can be analyzed in-line for mineral content to determine the blending additives necessary for required final product. This potentially reduces time, temperature, and duration of kiln processing while providing greater quality control over the composition of the final product.

Some specific applications in this domain are listed below:

High volume in-line material inspection; Control of treatment processes; Control of material sorting.

In the field of Pharmaceutical Manufacturing, the use of hyperspectral imaging expedites not only the drug discovery process, but gives advantages for pharmaceutical manufacturers moving novel compounds and drugs from the laboratory into the manufacturing plant. Specific applications are as follows:-Quality control; Control/optimisation of manufacturing processes (e.g. spray-dry dispersion).

In the field of Electronics and other Manufacturing, in-line or "at-line" spectral monitoring of critical formulation and inspection processes for maintenance, and operation of key steps within a process manufacturing operation is possible, using the invention. The near infrared range (NIR) of 900 to 1700 nanometers (nm) wavelength, and the extended visible-near infrared (extended VNIR) range of 600 to 1600 nm, are of considerable interest for process applications, examples of which are listed below:-

LCD quality control; Semiconductor operations; Pharmaceuticals; Photovoltaics; Semiconductor wafer inspection.

**Claims**

1. A spectral imaging system (1) including:

   a deformable lens (2) of dispersive material;
   a sensor (4) positioned to sense electromagnetic radiation received from the lens;
   means (36) to deform the lens (2) whereby to vary the focal length of the lens and to focus electromagnetic radiation of differing frequency on the sensor (4), and
   discriminator means (6) to discriminate a focused frequency of electromagnetic radiation received by the sensor from other unfocused frequencies.

2. A system according to claim 1, in which the means to deform the lens causes the lens to focus in turn on successive frequencies and the discriminator means discriminates in turn the successive focused frequencies from unfocused frequencies.

3. A system according to claim 1 or 2, in which the sensor comprises a focal plane array.

4. A system according to any preceding claim, in which the sensor is located at an image plane fixed in relation to the lens.

5. A system according to any preceding claim, wherein the deformable lens is a fluidic lens.

6. A system according to any preceding claim, wherein the deformable lens is relatively highly dispersive.

7. A system according to any preceding claim, wherein the deformable lens forms part of a compound lens having more than one optical element.

8. A system according to any preceding claim, wherein the discriminator means comprises a processor for determining a de-blurring of a single spectral value or band image.

9. A system according to any of claims 1 to 8, wherein the discriminator means comprises a processor for removing or ignoring radiation of substantially uniform brightness across detector pixels for unfocused frequencies of electromagnetic radiation.

**10.** A system according to any preceding claim, further including a non-deformable lens used substantially for focusing, with the deformable lens being used for spectral discrimination.

**11.** A system according to any preceding claim, including a broadband spectral filter to alleviate spectral edge effects.

**12.** A system according to any preceding claim, wherein the sensor includes a pixel array to sense the electromagnetic radiation, the pixel array defining an outer edge, and wherein the system includes means to select pixels whereby only to form an image from pixels located a certain distance inwards from the outer edge.

**13.** A method for spectral imaging, the method comprising, as a first step:

deforming a deformable lens of dispersive material to focus a first frequency band of electromagnetic radiation onto an image plane;
detecting all of the image radiation at this image plane;
repeating the first step, if required, as many times as necessary for further frequency bands of electromagnetic radiation, and
processing the detected image radiation data to perform spectral discrimination.

**14.** A computer program or plurality of computer programs arranged such that when executed by a computer system it/they cause the computer system to operate in accordance with the method of claim 13.

**15.** A machine readable storage medium storing a computer program or at least one of the plurality of computer programs according to claim 14.

**Patentansprüche**

**1.** Spektralabbildungssystem (1), das Folgendes umfasst:

eine verformbare Linse (2) aus dispersivem Material;
einen Sensor (4), der positioniert ist, um elektromagnetische Strahlung, die von der Linse empfangen wird, zu erfassen;
Mittel (36), um die Linse (2) zu verformen, wodurch die Brennweite der Linse verändert wird, und die elektromagnetische Strahlung mit unterschiedlicher Frequenz auf dem Sensor (4) zu fokussieren; und
Unterscheidungsmittel (6), um eine fokussierte Frequenz der elektromagnetischen Strahlung, die von dem Sensor empfangen wird, von anderen nicht fokussierten Frequenzen zu unterscheiden.

**2.** System nach Anspruch 1, wobei die Mittel zum Verformen der Linse die Linse dazu veranlassen, ihrerseits auf aufeinander folgenden Frequenzen zu fokussieren, und die Unterscheidungsmittel ihrerseits die aufeinander folgenden fokussierten Frequenzen von nicht fokussierten Frequenzen unterscheiden.

**3.** System nach Anspruch 1 oder 2, wobei der Sensor eine Brennebenen-Anordnung umfasst.

**4.** System nach einem vorhergehenden Anspruch, wobei sich der Sensor in einer Bildebene befindet, die in Bezug auf die Linse fest ist.

**5.** System nach einem vorhergehenden Anspruch, wobei die verformbare Linse eine fluidische Linse ist.

**6.** System nach einem vorhergehenden Anspruch, wobei die verformbare Linse verhältnismäßig stark dispersiv ist.

**7.** System nach einem vorhergehenden Anspruch, wobei die verformbare Linse einen Teil einer Verbundlinse, die mehr als ein optisches Element besitzt, bildet.

**8.** System nach einem vorhergehenden Anspruch, wobei die Unterscheidungsmittel einen Prozessor umfassen, um die Beseitigung der Unschärfe eines Bildes mit einem einzelnen Spektralwert oder mit einem Spektralband zu bestimmen.

**9.** System nach einem der Ansprüche 1 bis 8, wobei die Unterscheidungsmittel einen Prozessor umfassen, um Strahlung mit im Wesentlichen gleichmäßiger Helligkeit über den Detektor-Pixeln für nicht fokussierte Frequenzen der elektromagnetischen Strahlung zu beseitigen oder zu ignorieren.

**10.** System nach einem vorhergehenden Anspruch, das ferner eine unverformbare Linse umfasst, die im Wesentlichen zum Fokussieren verwendet wird, wobei die verformbare Linse für die spektrale Unterscheidung verwendet wird.

**11.** System nach einem vorhergehenden Anspruch, das ein Breitbandspektralfilter umfasst, um spektrale Kanteneffekte zu beseitigen.

**12.** System nach einem vorhergehenden Anspruch, wobei der Sensor eine Pixelanordnung enthält, um die elektromagnetische Strahlung zu erfassen, wobei die Pixelanordnung eine Außenkante definiert, und wobei das System Mittel umfasst, um Pixel auszuwählen, wodurch ein Bild nur aus Pixeln erzeugt wird, die sich in einem bestimmten Abstand innerhalb der äußeren Kante befinden.

**13.** Verfahren zur spektralen Abbildung, wobei das Verfahren als einen ersten Schritt Folgendes umfasst:

Verformen einer verformbaren Linse aus dispersivem Material, um ein erstes Frequenzband elektromagnetischer Strahlung auf einer Bildebene zu fokussieren;
Detektieren der gesamten Bildstrahlung auf dieser Bildebene;
Wiederholen des ersten Schrittes, falls erforderlich, sooft wie notwendig für weitere Frequenzbänder der elektromagnetischen Strahlung und
Verarbeiten der Daten der detektierten Bildstrahlung, um eine spektrale Unterscheidung auszuführen.

**14.** Computerprogramm oder Mehrzahl von Computerprogrammen, die dafür ausgelegt sind, dass sie dann, wenn sie von einem Computersystem ausgeführt werden, das Computersystem dazu veranlassen, in Übereinstimmung mit dem Verfahren nach Anspruch 13 zu arbeiten.

**15.** Maschinenlesbares Speichermedium, das ein Computerprogramm oder wenigstens eines der Mehrzahl von Computerprogrammen nach Anspruch 14 speichert.

**Revendications**

**1.** Système d'imagerie spectrale (1) comprenant :

une lentille déformable (2) en matériau dispersif ;
un détecteur (4) positionné pour détecter un rayonnement électromagnétique reçu de la lentille ;
un moyen (36) pour déformer la lentille (2) afin de faire varier la longueur focale de la lentille et de focaliser un rayonnement électromagnétique de fréquence variable sur le détecteur (4) ; et
un moyen de discrimination (6) pour différencier une fréquence focalisée de rayonnement électromagnétique reçu par le détecteur d'autres fréquences non focalisées.

**2.** Système selon la revendication 1, dans lequel le moyen pour déformer la lentille amène la lentille à focaliser tour à tour des fréquences successives et le moyen de discrimination différencie tour à tour les fréquences focalisées successives de fréquences non focalisées.

**3.** Système selon la revendication 1 ou 2, dans lequel le détecteur comprend une matrice à plan focal.

**4.** Système selon l'une quelconque des revendications précédentes, dans lequel le détecteur est situé au niveau d'un plan image fixe par rapport à la lentille.

**5.** Système selon l'une quelconque des revendications précédentes, dans lequel la lentille déformable est une lentille fluidique.

**6.** Système selon l'une quelconque des revendications précédentes, dans lequel la lentille déformable est assez fortement dispersive.

**7.** Système selon l'une quelconque des revendications précédentes, dans lequel la lentille déformable fait partie d'une lentille composite comportant plusieurs éléments optiques.

**8.** Système selon l'une quelconque des revendications précédentes, dans lequel le moyen de discrimination comprend un processeur pour déterminer un déflouage d'une image de valeur ou bande spectrale unique.

**9.** Système selon l'une quelconque des revendications 1 à 8, dans lequel le moyen de discrimination comprend un processeur pour retirer ou ignorer un rayonnement de luminosité sensiblement uniforme à travers les pixels du détecteur pour des fréquences non focalisées de rayonnement électromagnétique.

**10.** Système selon l'une quelconque des revendications précédentes, comprenant en outre une lentille non déformable utilisée en grande partie pour la focalisation, la lentille déformable étant utilisée pour la discrimination spectrale.

**11.** Système selon l'une quelconque des revendications précédentes, comprenant un filtre spectral à large bande pour atténuer les effets de bord spectral.

**12.** Système selon l'une quelconque des revendications précédentes, dans lequel le détecteur comprend un réseau de pixels pour détecter le rayonnement électromagnétique, le réseau de pixels définissant un bord extérieur, et le système comprenant un moyen pour sélectionner des pixels afin de former une image uniquement à partir des pixels situés à une certaine distance à l'intérieur du bord extérieur.

**13.** Procédé d'imagerie spectrale, le procédé comprenant, comme première étape:

la déformation d'une lentille déformable en matériau dispersif pour focaliser une première bande de fréquence de rayonnement électromagnétique sur un plan image ;
la détection de tout le rayonnement image au niveau de ce plan image ;
la répétition de la première étape, si nécessaire, autant de fois que nécessaire pour d'autres bandes de fréquence de rayonnement électromagnétique ; et
le traitement des données de rayonnement image détectées pour effectuer une discrimination spectrale.

**14.** Programme informatique ou pluralité de programmes informatiques configuré(s) de telle sorte que, lorsqu'il(s) est/sont exécuté(s) par un système informatique, il(s) fait/font fonctionner le système informatique selon le procédé de la revendication 13.

**15.** Support de stockage lisible par machine stockant un programme informatique ou l'un au moins de la pluralité de programmes informatiques selon la revendication 14.

# Fig.1.

# Fig.3.

Fig.2A.

Fig.2B.

Fig.2C.

# Fig.4.

```
        ┌─────────┐
        │  Start  │
        └────┬────┘
             │
   ┌─────────┴──────────────────┐
   │                            ▼
   │   ┌───────────────────────────────┐
   │   │     Deform lens to provide     │──── S2
   │   │       a first focal length     │
   │   └───────────────┬───────────────┘
   │                   ▼
   │   ┌───────────────────────────────┐
   │   │      Detect image radiation    │──── S4
   │   │       at a fixed image plane   │
   │   └───────────────┬───────────────┘
   │                   ▼
   │   ┌───────────────────────────────┐
   │   │     Deform lens to provide     │──── S6
   │   │      a further focal length    │
   │   └───────────────┬───────────────┘
   │                   ▼
   │   ┌───────────────────────────────┐
   │   │      Detect image radiation    │──── S8
   │   │    at the same fixed image plane│
   │   └───────────────┬───────────────┘
```

┌─────────────────────────────────────────────┐
│  Process detected image radiation data   │──── S10
│  to discriminate between separate images     │
│  for different electromagnetic frequencies   │
│      of the detected image radiation         │
└─────────────────────────────────────────────┘

End process? — S12

No    Yes

┌─────────┐
│   End   │
└─────────┘

# Fig.5.

Light from these directions focused onto central pixel

Sensor Array

$0.5\Delta x$

Lens Diameter—$D_{lens}$

$\Delta z$

Central Pixel

$l_p$ (Pixel Width)

$f_0$

## Fig.6.

62

61

63

## Fig.7.

72

73

71

## Fig.8.

# Fig.9.

91

92

93

94

# Fig.10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3641354 A
- WO 2010018403 A
- US 5684636 A

### Non-patent literature cited in the description

- **Q. SUN et al.** Application of binary optical element to infrared hyperspectral detection. *Science in China (Series E,* December 2003, vol. 46 (6), 654-660
- **M. HINNRICHS ; N. GUPTA.** Lenslet Arrays for Simultaneous Infrared Multi-spectral Imaging of CB Targets. *7th Joint Standoff Detection for Chemical and Biological Defense,* 23 October 2007
- Fabrication of a fluidic membrane lens system. **DRAHEIM et al.** Journal of Micromechanics and Microengineering. IOP Publishing, 2009, vol. 19, 095013
- **H. OKU ; M. ISHIKAWA.** A rapidly deformable liquid lens. *SPIE Newsroom,* 2009, vol. 10.1117
- **H. REN et al.** Variable-focus liquid lens. *Optics Expres,* 14 May 2007, vol. 15 (10), 5931-5936
- **M. G. DOUALI ; J. D. SILVER.** Self-optimised vision correction with adaptive spectacle lenses in developing countries. *Ophthal. Physiol. Opt.,* 2004, vol. 24, 234-241
- **A. KRIEL et al.** Tuneable optical lenses from diamond thin films. *Applied Physics letters,* 2009, vol. 95, 031905
- Fabrication of a fluidic membrane lens system. **J. DRAHEIM et al.** Journal of Micromechanics and Microengineering. IOP Publishing, 2009, vol. 19, 095013
- **H. REN et al.** Variable-focus liquid lens. *Optics Express,* 14 May 2007, vol. 15 (10), 5931-5936
- Dispersive liquids - Wilcox. *The Amerial Mineralogist,* 1964, vol. 49
- **F. YAKUPHANOGLU et al.** The refractive index dispersion and the optical contents of liquid crystal metal-free and nickel(II) phthalocyanines. *Physica B,* 2006, vol. 373, 262-266
- **A. KRIELE et al.** Tuneable optical lenses from diamond thin films. *Applied Physics letters,* 2009, vol. 95, 031905